**Europäisches Patentamt**

**European Patent Office**

**Office européen des brevets**

(11) Veröffentlichungsnummer : **0 401 196 B1**

(12) **EUROPÄISCHE PATENTSCHRIFT**

(45) Veröffentlichungstag der Patentschrift :
**28.10.92 Patentblatt 92/44**

(21) Anmeldenummer : **90890139.0**

(22) Anmeldetag : **08.05.90**

(51) Int. Cl.⁵ : **F01N 3/28**

(54) **Auspuffanlage für Zweitakt-Brennkraftmaschinen.**

(30) Priorität : **01.06.89 AT 1331/89**

(43) Veröffentlichungstag der Anmeldung :
**05.12.90 Patentblatt 90/49**

(45) Bekanntmachung des Hinweises auf die
Patenterteilung :
**28.10.92 Patentblatt 92/44**

(84) Benannte Vertragsstaaten :
**CH DE ES FR GB IT LI SE**

(56) Entgegenhaltungen :
**DE-U- 8 808 796**
**FR-A- 2 167 132**
**FR-A- 2 460 388**
**US-A- 4 065 918**
**US-A- 4 206 177**

(73) Patentinhaber : **Laimböck, Franz, Dipl.Ing.Dr.**
**Waldsdorfberg 86**
**A-8051 Graz-Thal (AT)**

(72) Erfinder : **Laimböck, Franz, Dipl.Ing.Dr.**
**Waldsdorfberg 86**
**A-8051 Graz-Thal (AT)**

(74) Vertreter : **Hübscher, Helmut, Dipl.-Ing. et al**
**Patentanwälte Dipl.-Ing. Gerhard Hübscher**
**Dipl.-Ing. Helmut Hübscher Dipl.-Ing. Heiner**
**Hübscher Spittelwiese 7**
**A-4020 Linz (AT)**

**Beschreibung**

Die Erfindung bezieht sich auf eine Auspuffanlage für Zweitakt-Brennkraftmaschinen, bei der an die Brennkraftmaschine ein zu einer Prallwand mit vorgeordnetem katalysator führender Diffusor anschließt, in dem ein Abströmrohr vorgesehen ist, dessen Durchmesser wesentlich kleiner als der kleinste Durchmesser des Diffusors bemessen ist.

Zur Einhaltung der gesetzlich vorgeschriebenen Abgaswerte, die in einem Fahrzyklus meist mit kaltstart und Leerlaufanteilen ermittelt werden, ist ein rasches Anspringen bzw. Zünden des katalysators unerläßlich. Nun befindet sich aber der katalysator, wenn er einem für die gasdynamische Wirkung wesentlichen Diffusor nachgeordnet ist, in beträchtlichem Abstand von der Brennkraftmaschine, wo die Abgastemperaturen so weit gesunken sind, daß die Zündtemperatur in einem Fahrzyklus vergleisweise spät erreicht wird. Die Prallwand hat die Aufgabe, die Druckwellen als solche zu reflektieren, um den Ladungswechsel zu unterstützen.

Es ist bereits eine Auspuffanlage der eingangs beschriebenen Art bekannt (US-A 4 206 177), bei der jedoch das Abströmrohr ein nur verhältnismäßig kurzes Stück in den Diffusor reicht und überdies den katalysator um sein in den Diffusor reichendes Ende umwickelt hat, so daß die Auspuffgase nicht durch das Abströmrohr in den katalysator gelangen, sondern radial durch den katalysator in das Abströmrohr eintreten müssen. Eine rasche Zündung des katalysators wird dadurch keinesfalls erzielt.

Aufgabe der Erfindung ist es, die eingangs geschilderte Auspuffanlage mit einfachen Mitteln so zu verbessern, daß eine rasche Zündung des katalysators erfolgt, ohne die gasdynamischen Vorgänge ungünstig zu beeinflussen.

Die Erfindung löst die gestellte Aufgabe dadurch, daß das Abströmrohr im unmittelbar von der Zylinderaustrittsöffnung ausgehenden Diffusor vom Bereich des Endes einer an die Zylinderaustrittsöffnung anschließenden Diffusorkrümmung bis zu einem steilen Trichter reicht, der direkt zu dem in einem erweiterten Abschnitt des Abströmrohres befindlichen katalysator führt.

Durch das Abströmrohr wird der gesamte Abgasstrom hindurchgeleitet, wobei, da es bis in den Bereich des Endes der Diffusorkrümmung, also in die heiße Anfangszone des Diffusors ragt, der katalysator durch den Trichter vom noch heißen Abgas beaufschlagt wird und daher rasch zündet. Da aber der Querschnitt des Abströhmrohres im Diffusor vergleichsweise gering bemessen ist, werden die gasdynamischen Verhältnisse im Diffusor kaum beeinträchtigt.

Zweckmäßig ist es auch, wenn im Abströmrohr im Bereich des Trichtereintrittes eine Drossel vorgesehen ist. Dadurch wird der Abgasstrom innerhalb des Trichters schweißbrennerartig gebündelt, so daß an der katalysatorstirnfläche örtlich rasch die Zündtemperatur erreicht wird.

Um einen strömungstechnisch günstigeren Gaseintritt in das Abströmrohr zu erreichen, weist der Eintritt in dieses Durchbrechungen, vorzugsweise Längsschlitze, auf oder ist trichterförmig erweitert.

In der Zeichnung ist der Erfindungsgegenstand beispielsweise dargestellt, und zwar zeigen

Fig. 1 die erfindungswesentlichen Teile einer Auspuffanlage im Längsschnitt und
Fig. 2 und 3 Teile der Auspuffanlage in gleicher Darstellungsweise.

An die Austrittsöffnung 6 eines Zylinders 7 einer Zweitakt-Brennkraftmaschine 1 schließt ein zunächst gekrümmter Diffusor 2 an, der zu einer Prallwand 3 führt. Im Diffusor 2 ist ein Abströmrohr 5 angeordnet, das vom Bereich des Endes der Diffusorkrümmung bis zu einem steilen Trichter 8 reicht, der direkt zu einem in einem erweiterten Abschnitt des Abströmrohres 5 befindlichen katalysator 4 führt. Der Durchmesser des Abströmrohres 5 innerhalb des Diffusors 2 beträgt etwa die Hälfte des kleinsten Durchmessers des Diffusors 2. Wie ersichtlich, ist der katalysator 4 vor der Prallwand 3 mit Abstand von der Außenwand 9 der Auspuffanlage angeordnet.

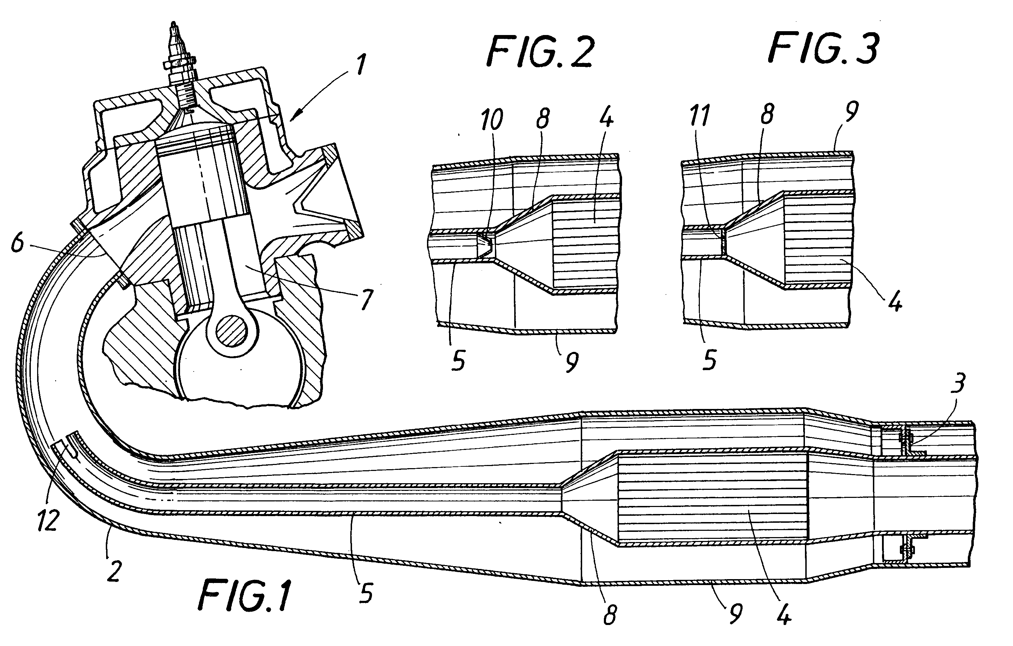

Am Ende des Abströmrohres 5 ist im Bereich des Eintritts in den Trichter 8 eine Drossel vorgesehen, die gemäß Fig. 2 als kleine Düse 10 oder gemäß Fig. 3 als einfache Blende 11 ausgebildet sein kann. Am Eintritt in das Abströmrohr 5 sind Längsschlitze 12 oder sonstige Durchbrechungen vorgesehen.

**Patentansprüche**

1. Auspuffanlage für Zweitakt-Brennkraftmaschinen, bei der an die Brennkraftmaschine (1) ein zu einer Prallwand (3) mit vorgeordnetem Katalysator (4) führender Diffusor (2) anschließt, in dem ein Abströmrohr (5) vorgesehen ist, dessen Durchmesser wesentlich kleiner als der kleinste Durchmesser des Diffusors (2) bemessen ist, dadurch gekennzeichnet, daß das Abströmrohr (5) im unmittelbar von der Zylinderaustrittsöffnung (6) ausgehenden Diffusors (2) vom Bereich des Endes einer an die Zylinderaustrittsöffnung (6) anschließenden Diffusorkrümmung bis zu einem steilen Trichter (8) reicht, der direkt zu dem in einem erweiterten Abschnitt des Abströmrohres (5) befindlichen Katalysator (4) führt.

2. Anlage nach Anspruch 1, dadurch gekennzeichnet, daß im Abströmrohr (5) im Bereich des Trichtereintritts eine Drossel (10; 11) vorgesehen ist.

3. Anlage nach Anspruch 1 oder 2, dadurch gekennzeichnet, daß der Eintritt in das Abströmrohr (5) Durchbrechungen, vorzugsweise Längsschlitze (12), aufweist oder trichterförmig erweitert ist.

préférence des fentes longitudinales (12), ou s'évase en forme d'entonnoir.

## Claims

1. An exhaust system for two-stroke internal combustion engines, in which a diffuser (2) leading to a baffle plate (3) preceded by a catalyst (4) is connected to the internal combustion engine (1) and contains an outflow tube (5), the diameter of which is substantially smaller than the smallest diameter of the diffuser (2), characterised in that the outflow tube (5) extends inside the diffuser (2) leading directly from the cylinder exhaust port (6), said outflow tube (5) extending from the region of the end of a diffuser bend adjoining the cylinder exhaust port (6), as far as a steep funnel (8), which leads directly to the catalyst (4) disposed in a widened portion of the outflow tube (5).

2. A system according to claim 1, characterised in that a restrictor (10; 11) is provided in the outflow tube (5) in the region of the funnel inlet.

3. A system according to claim 1 or 2, characterised in that the entry to the outflow tube (5) is formed with perforations, preferably slots (12), or is widened out to be funnel-shaped.

## Revendications

1. Installation d'échappement pour moteurs à combustion interne à deux temps, comprenant un diffuseur (2) raccordé au moteur à combustion interne (1), qui conduit à une chicane (3) précédée d'un catalyseur (4), et dans lequel est prévu un tube d'évacuation (5) dont le diamètre est beaucoup plus petit que le diamètre minimum du diffuseur (2),
caractérisée en ce que, dans le diffuseur (2) qui part directement de la lumière (6) de sortie du cylindre, le tube d'évacuation (5) s'étend de la région de l'extrémité d'une courbe du diffuseur qui se raccorde à la lumière (6) de sortie du cylindre, jusqu'à un entonnoir (8) à pente raide, qui mène directement au catalyseur (4) placé dans un segment élargi du tube d'évacuation (5).

2. Installation selon la revendication 1, caractérisée en ce qu'il est prévu un étranglement (10 ; 11) dans le tube d'évacuation (5), dans la région de l'entrée de l'entonnoir.

3. Installation selon la revendication 1 ou 2, caractérisée en ce que l'entrée dans le tube d'évacuation (5) présente deux découpures, de

FIG.3

FIG.2

FIG.1